(19) Europäisches Patentamt
European Patent Office
Office européen des brevets

(11) **EP 2 770 395 B1**

(12) **FASCICULE DE BREVET EUROPEEN**

(45) Date de publication et mention
de la délivrance du brevet:
**25.05.2016 Bulletin 2016/21**

(51) Int Cl.:
***G05D 1/06*** *(2006.01)*  ***G08G 5/02*** *(2006.01)*

(21) Numéro de dépôt: **14000581.0**

(22) Date de dépôt: **19.02.2014**

(54) **Procédé pour faciliter l'approche d'une plateforme**

Verfahren zum Erleichtern des Annäherns einer Plattform

Method for facilitating the approach of a platform

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.02.2013 FR 1300428**

(43) Date de publication de la demande:
**27.08.2014 Bulletin 2014/35**

(73) Titulaire: **Airbus Helicopters
13725 Marignane Cedex (FR)**

(72) Inventeurs:
• **Iraudo, Lionel
13760 Saint Cannat (FR)**
• **Canale, Nicolas
13006 Marseille (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**US-A1- 2010 168 939**

• **"Advisory Circular AC No: 90-80B: Approval of
Offshore Standard Approach Procedures,
Airborne Radar Approaches, and Helicopter En
Route Descent Areas", , 12 avril 1999
(1999-04-12), XP055097872, Extrait de l'Internet:
URL:http://www.faa.gov/documentLibrary/med
ia/Advisory_Circular/AC90-80B.pdf [extrait le
2014-01-22]**
• **"EGNOS Offshore Helicopter Approach
Procedure", GIANT GNSS INTRODUCTION IN
THE AVIATOR SECTOR,, 24 janvier 2008
(2008-01-24), pages 1-8, XP003032932,**

**Description**

La présente invention concerne un procédé pour faciliter l'approche d'une plateforme à partir d'un aéronef, et notamment d'un aéronef à atterrissage court tel qu'un aéronef muni d'une voilure tournante par exemple.

L'invention se situe donc dans le domaine technique des systèmes d'assistance au pilotage d'un aéronef, et notamment des systèmes automatisés d'aide à l'approche de plateformes pour giravion.

En effet, un aéronef à voilure tournante doit pouvoir trouver et approcher en sécurité des plateformes ou vaisseaux mobiles, indépendamment des conditions météorologiques et de visibilité et en évitant les d'obstacles présents dans la zone d'approche.

L'approche est conduite en tenant compte de la direction et de la vitesse du vent dans le secteur, du type de plateforme à approcher (plateformes fixes, mobiles, bateaux ou barges), des obstacles environnants (grues, barges, bateaux servant au positionnement de la plateforme, bateaux type porte container ou super tanker naviguant autour de la zone d'approche, ou autres plateformes environnantes), du confort des passagers.

Les approches de plateforme sont généralement constituées des segments de vol suivants.

Ainsi, l'approche comporte un segment d'arrivée qui relie le dernier point de vol de la phase de vol en cours et un point initial d'approche connu sous l'acronyme « IAF » soit « Initial Approach Fix » en langue anglaise. Ce segment d'arrivée est généralement positionné à une altitude de 1500 ft. On rappelle que le symbole « ft » fait référence à l'unité de longueur dénommée « feet » en langue anglaise valant 30.48 centimètres.

Un segment d'approche initiale peut relier le point initial d'approche IAF à un point intermédiaire connu sous l'acronyme IF soit « Intermediate Fix » en langue anglaise. Ce segment d'approche initiale vise à permettre à l'aéronef de décélérer et de s'aligner sur la trajectoire à suivre.

Un segment d'approche intermédiaire peut relier le point intermédiaire IF à un point final d'approche connu sous l'acronyme « FAF » soit « Final Approach Fix » en langue anglaise pour descendre à une altitude allant jusqu'à 1000 ft. Ce segment a pour but d'aligner l'appareil, de décélérer et de préparer le segment d'approche finale.

Un segment d'approche finale relie le point final d'approche FAF et un point de décision connu sous l'acronyme « MAP » soit « Missed Approach point » en langue anglais.

Si un pilote établit un contact visuel avec la plateforme au point de décision, le pilote peut poser son aéronef sur cette plateforme.

Par contre, un segment dit de remise des gaz doit être conduit si le contact visuel avec la plate-forme n'est pas obtenu à ce stade de l'approche. Ce segment de remise des gaz peut par ailleurs être conduit à n'importe quel moment de l'approche si l'équipage le juge utile. L'objet de ce segment de remise des gaz est de rejoindre une altitude de sécurité.

Les documents suivants présentent des approches connues de plateformes :

- le document AC90-80B « Approval of Offshore Standard Approach Procédures, Airborne Radar Approaches, and Helicopter En Route Descent Areas » publié le 12.04.99

- le document JAR OPS 3, Section 2, Subpart E IEM to Appendix 1 to JAR-OPS 3.430 sub-paragraph (d) (amendement 2, publié le 01.01.02).

- le document EU-OPS COMMISSION REGULATION (EU) No 965/2012 of 5 October 2012 (AMC1 CAT.OP.MPA.120 and GM1 CAT.OP.MPA.120),

- le document CAA paper 2010/01 "The SBAS Offshore Approach Procédure (SOAP)".

Lorsque les conditions météorologiques sont défavorables, une 'approche aux instruments est propice au stress de l'équipage qui doit piloter manuellement l'aéronef pour le guider vers une zone où l'acquisition visuelle de la plateforme sera obtenue.

Dans la transition entre la phase de vols aux instruments et la phase de vol visuelle, l'équipage doit basculer en permanence entre ce qui est affiché sur les écrans de pilotage du tableau de bord, et ce qu'il observe à l'extérieur pour détecter un quelconque signe/indice visuel permettant de confirmer la position de la plateforme (lumière, relief). Cette façon d'approcher sur plateforme n'est donc pas la plus pratique et peut quelquefois créer des erreurs d'interprétation en cas par exemple de brouillard faisant perdre temporairement l'acquisition visuelle de la cible d'atterrissage.

Les approches aux instruments vers une plateforme ou vaisseaux mobiles sont jusqu'à présent conduites sans l'utilisation d'un calculateur de navigation, connu sous l'acronyme « FMS » soit « Flight Management System » en langue anglaise, et sans couplage au pilote automatique de l'aéronef sur une trajectoire d'approche prédéfinie par le FMS.

Certaines plateformes sont aujourd'hui équipées d'un dispositif, connu sous l'acronyme « NDB » soit « Non Directional Beacon » en langue anglaise, utilisé par l'équipage via le calculateur de navigation comme moyen d'aide à la navigation et de corrélation de la position de l'appareil avec une précision relative mais ce moyen ne permet pas la construction d'un plan de vol d'approche.

On connaît un calculateur de navigation utilisé pour fournir un guidage horizontal lors de la phase en route. Pour la phase d'approche, l'équipage détermine un point cible hors route correspondant aux coordonnées de la plateforme à atteindre comme moyen d'aide à la navigation. Cependant, le calculateur de navigation ne segmente pas les différentes phases de l'approche vers la plateforme pour asservir le pilote automatique sur ces données de guidage (déviation horizontale, verticale, consigne de vitesse).

L'approche est alors conduite manuellement ou semi automatiquement via l'assistance de certains modes supérieurs du pilote automatique en utilisant les cartes d'approche publiées par les opérateurs et approuvées par les autorités locales.

Le radar météo de l'aéronef peut en outre être utilisé comme moyen d'identification de la plateforme, de détection et d'évitement d'obstacle transitoire ou fixe au cours de l'approche et de la descente finale.

Le document US 2010/0168939 propose un module et un procédé automatisé d'approche d'une plateforme sur une trajectoire d'approche construite à partir de points d'approche.

Selon ce document US 2010/0168939, un pilote saisit dans un module de l'aéronef :

- les coordonnées de la plateforme cible à atteindre,

- un cap d'approche finale vers la plateforme,

- une distance de décalage séparant latéralement la trajectoire à suivre d'une trajectoire dirigée vers la plateforme suivant ce cap d'approche,

- une hauteur de descente.

Dès lors, le module de l'aéronef détermine notamment la position du point initial d'approche IAF et du point final d'approche FAF en réponse aux données saisies. L'aéronef est alors dirigé vers le point initial d'approche.

Ainsi, la trajectoire d'approche construite comporte un segment horizontal reliant un point initial d'approche IAF à un point final d'approche FAF.

Ensuite, la trajectoire comprend un segment de descente puis un segment en palier pour relier le point final d'approche FAF» à un point de décision MAP.

Le point initial d'approche IAF, le point final d'approche FAF et le point de décision MAP sont contenus dans un plan vertical parallèle au cap d'approche choisi. On comprend que l'on appelle par « plan vertical » un plan dirigé selon la pesanteur, des points de ce plan vertical pouvant se trouver à des altitudes différentes.

Ce plan vertical est décalé par rapport à la plateforme d'une distance égale à la distance de décalage saisie.

Cette approche peut présenter l'inconvénient ne pas être compatible avec certaines procédures actuelles, en particulier pas compatible avec les approches ARA EU OPS utilisées actuellement en Mer du Nord.

En outre, ce document ne prend pas en considération les spécificités des plateformes. En effet, les plateformes ont des formes différentes. L'emplacement d'une zone d'atterrissage d'une plateforme peut ainsi être éloigné des coordonnées de la plateforme saisies.

Le document US 2008/0119970 porte sur un système de guidage de précision en approche comportant un système inertiel, une base de données terrain et un senseur d'image (ou télémètre).

L'arrière plan technologique inclut connaît aussi les documents suivants :

- Esterline CMC electronics, CMA-9000 flight management system operator's manual, operational program S/W 169-614876-022, publication N°9000-GEN-0105, itel N). 930-6000088-00, august 21.2008

- N.McFarlane, A new procédure for North Sea Helicopter Opérations, Second GIANT use forum, Brussels, Belgium, October 9, 2008,

- K.M Dodson and J.R.A. Stevens, A North Sea trial to investigate the use of Differential GPS for instrument Approaches to Offshore Platforms, paper presented at the 23rd European Rotorcraft Forum, Dresden, Germany, September 1997,

- le brevet US 6720891,

- XP003032932 « EGNOS Offshore Helicopter Approach Procédure », GIANT GNSS INTRODUCTION IN THE AVIATOR SECTOR, 24 janvier 2008 (2088-01-24).

La présente invention a alors pour objet de proposer un procédé d'approche visant à aider un équipage à atterrir sur une plateforme avec un aéronef.

Selon l'invention, un procédé pour faciliter l'approche d'une plateforme avec un aéronef comprend :

- une étape de construction d'une base de données de plateformes incluant pour chaque plateforme mémorisée des attributs incluant au moins un identifiant de la plateforme, des coordonnées de la plateforme, une hauteur d'une zone d'atterrissage de la plateforme dite « hauteur d'atterrissage » et le rayon d'un cercle dans lequel est inscrite la plateforme,

- une étape de paramétrage à bord de l'aéronef dans un module de paramétrage pour déterminer les informations suivantes :

   o la plateforme cible à atteindre parmi les plateformes mémorisées dans ladite base de données,

   o un cap à suivre pour rejoindre ladite plateforme cible,

   o un paramètre de hauteur relatif à une altitude minimale de décision pour une descente en approche finale vers ladite plateforme cible,

- une étape de construction d'une trajectoire d'approche mise en oeuvre par un module de navigation pour déterminer la position d'un point d'approche initiale IAF, d'un point d'approche finale FAF, d'un point de décalage OIP et d'un point de décision MAP en réponse auxdites informations paramétrées et auxdits attributs de la plateforme cible, le point d'approche initiale IAF ainsi que le point d'approche finale FAF et le point de décalage OIP et la localisation des coordonnées de la plateforme cible étant présents dans un même plan vertical, dirigé selon ledit cap le point de décision MAP étant décalé par rapport à ce plan vertical.

On rappelle qu'une « hauteur » représente la distance verticale entre un corps et un sol, une « altitude » représentant la distance verticale entre un corps et le niveau de la mer. La hauteur d'un aéronef est usuellement mesurée par une radiosonde par le biais d'ondes, l'altitude étant mesurée par un altimètre via une mesure de pression.

Par conséquent, la hauteur et l'altitude d'un aéronef ou d'une zone d'atterrissage d'une plateforme au-dessus de la mer font référence à des distances équivalentes si l'on on calibre l'altimètre avec la pression ramenée au niveau de la mer, le QNH.

Dès lors, ce procédé ne met pas en oeuvre une distance de décalage selon le document US 2010/0168939. Au contraire, le point d'approche initiale IAF ainsi que le point d'approche finale FAF et le point de décalage OIP sont situés dans un plan vertical contenant les coordonnées de la plateforme cible à atteindre. La trajectoire d'approche s'écarte du plan vertical seulement à partir du point de décalage OIP uniquement pour rejoindre le point de décision.

Par conséquent, ce procédé propose l'élaboration automatique d'une trajectoire d'approche innovante, compatible notamment avec les approches ARA EU OPS utilisées actuellement en Mer du Nord.

De plus, ce procédé introduit un paramètre innovant pour élaborer la trajectoire d'approche. Ce paramètre innovant est le rayon d'un cercle dans lequel est inscrite la plateforme cible dénommé « obstacle radius » en langue anglaise.

La trajectoire d'approche prend donc en considération les spécificités géométriques de la plateforme cible, contrairement aux trajectoires basées sur des coordonnées d'une plateforme uniquement.

Ainsi, le procédé permet de faciliter le travail d'un équipage en élaborant la trajectoire à suivre facilement. L'étape de paramétrage peut d'ailleurs être semi-automatique en proposant des choix par défaut à cet équipage, l'équipage pouvant simplement valider les choix proposés, où les modifier.

Le procédé peut de plus comporter une ou plusieurs des caractéristiques additionnelles qui suivent.

Ainsi, ce procédé peut inclure une étape de guidage sur le point d'approche initiale IAF calculé. Un organe de guidage guide alors l'aéronef vers ce point d'approche initiale.

L'organe de guidage peut comprendre un module de guidage horizontal et/ou vertical communiquant avec un système de pilotage automatique pour guider l'aéronef le long de la trajectoire d'approche élaborée par le module de navigation.

Par exemple, le module de paramétrage, le module de navigation, un module de guidage horizontal et un module de guidage vertical sont implémentés dans un calculateur de navigation. Ce calculateur de navigation peut alors fournir des données de guidage à un système de pilotage automatique pour guider l'aéronef sur la trajectoire élaborée.

Eventuellement, il est aussi possible d'afficher des informations sur des instruments de pilotage pour que le pilote dirige manuellement l'aéronef le long de la trajectoire élaborée. Par exemple, un cap optimal à suivre ou une vitesse de descente sont affichés pour aider le pilote à suivre cette trajectoire. Ce cap est par exemple choisi pour placer l'aéronef face au vent.

Par ailleurs, durant l'étape de paramétrage, on peut éventuellement choisir un type d'approche parmi une liste de types d'approches prédéterminées. Une telle liste peut inclure une approche de type ARA ou encore une approche de type DELTA30 par exemple.

Les divers points calculés de la trajectoire d'approche pourront alors tenir compte des spécificités réglementaires des normes définissant ces deux types d'approches.

Selon une première variante, le paramètre de hauteur inclut un choix de détermination manuelle d'une altitude minimale de décision MDA paramétrée manuellement par un pilote à laquelle sont positionnés ledit point de décalage OIP et ledit point de décision MAP.

Durant l'étape de paramétrage, l'équipage choisit un paramétrage manuel et détermine l'altitude minimale de décision MDA. A cet effet, l'équipage peut saisir cette altitude minimale de décision MDA, ou valider une altitude par défaut par exemple.

Selon une deuxième variante, le paramètre de hauteur est un choix de détermination automatique par le module de navigation d'une altitude minimale de décision MDA à laquelle sont positionnées ledit point de décalage OIP et ledit point de décision MAP.

L'unité de navigation détermine alors l'altitude minimale de décision MDA adéquate selon des relations mémorisées et établies par le constructeur.

Par exemple, l'altitude minimale de décision MDA est la valeur maximale entre d'une part une altitude seuil et, d'autre part la somme de ladite hauteur d'atterrissage et d'une constante minimale de décision prédéterminée par le constructeur.

Le module de navigation peut de plus déterminer l'heure d'arrivée sur la plateforme et prédéterminer l'altitude minimale de décision MDA en conséquence, celle-ci variant selon l'heure d'arrivée.

Il est notamment possible de prévoir une altitude seuil durant un vol de jour de 200 ft par exemple, et une autre altitude seuil durant un vol de nuit de 300 ft par exemple.

A cet effet, on comprend que le module de navigation fait appel à des vitesses d'avancement prédéterminées et mémorisées entre les divers points de passage calculés pour estimer l'heure d'arrivée.

La première variante et la deuxième variante sont compatibles entre elles. Ainsi, un équipage peut choisir durant l'étape de paramétrage l'une ou l'autre de ces variantes.

Par ailleurs, le point de décision MAP peut être positionné en déterminant une distance longitudinale D1 séparant un point dit point de calcul de la plateforme, et en déterminant une distance orthogonale D2 séparant le point de calcul du point de décision MAP pour décaler le point de décision du plan vertical selon les relations suivantes :

$$D1 = a * \cos[-\alpha + \arcsin(\frac{c}{a} * \sin \alpha)]$$

$$D2 = a * \sin[-\alpha + \arcsin(\frac{c}{a} * \sin \alpha)]$$

avec

$$a = OR + MDR \text{ et } c = CTEOIP + OR$$

où « * » représente le signe de la multiplication, « OR » représente ledit rayon d'un cercle dans lequel est inscrite la plateforme cible, « MDR » et « CTEOIP » deux constantes fixées par le constructeur, « $\alpha$ » représente un angle de décalage fixé par le constructeur.

L'angle de décalage et la constante MDR peuvent varier selon le type d'approche.

Ce point de décision est donc positionné en fonction d'un rayon de la plateforme mémorisé dans une base de données et de deux constantes fixés par le constructeur.

Par ailleurs, durant l'étape de paramétrage, on choisit un côté de décalage du point de décision par rapport au plan vertical.

L'équipage peut choisir de positionner le point de décision à gauche ou à droite du plan vertical, la gauche et la droite s'entendant selon le sens de déplacement de l'aéronef vers la plateforme.

A titre de variante ou de complément, le procédé peut imposer un côté de décalage. Par exemple, la base de données peut spécifier un côté de décalage, pour éviter un obstacle identifié par exemple.

En outre, le point de décalage OIP peut être est positionné à une distance de décalage DOIP de la plateforme cible égale à la somme d'une constante CTEOIP fixée par le constructeur et dudit rayon d'un cercle dans lequel est inscrite la plateforme cible.

Par ailleurs, le point d'approche finale FAF est positionné à une altitude minimale de sécurité MSA, ladite altitude minimale de sécurité MSA étant égale à la valeur maximale entre d'une part une altitude minimale de sécurité seuil et, d'autre part la somme de ladite hauteur d'atterrissage et d'une constante minimale de sécurité prédéterminée par le constructeur.

L'altitude minimale de sécurité seuil et la constante minimale de sécurité peuvent varier selon le type d'approche.

Le point d'approche finale FAF est alors positionné à une distance d'approche finale DFAF de la plateforme cible égale à

$$DFAF = OR + k1 + k2 + \frac{MIN - k4}{\tan \beta} + \frac{MSA - MIN}{\tan \beta}$$

où « DFAF » représente la distance d'approche finale, « OR » représente ledit rayon d'un cercle dans lequel est inscrite la plateforme cible, « K1 » représente une constante d'approche fixée par le constructeur, « K2 » représente une variable figée par le constructeur , « MSA » représente une altitude minimale de sécurité à laquelle est positionné le point d'approche final, « MIN » représente une altitude minimale fixée par le constructeur, « $\beta$ » représente l'angle d'un segment de vol en descente reliant le point d'approche finale à un plan horizontal contenant ledit point de décalage OIP et ledit point de décision MAP.

L'angle $\beta$ peut varier selon le type d'approche choisi.

En outre, ledit point d'approche initiale IAF est positionné à une altitude dite altitude minimale de route MEA, ladite altitude minimale de route MEA étant éventuellement égale à la valeur maximale entre d'une part une altitude minimale de route seuil et, d'autre part la somme de ladite hauteur d'atterrissage et d'une constante minimale de route prédéterminée par le constructeur.

L'altitude minimale de route MEA ne varie pas suivant le type d'approche.

Dès lors, le point d'approche initiale IAF est positionné à une distance d'approche initiale DIAF de la plateforme cible égale à

$$DIAF = OR + k1 + k2 + \frac{MIN - k4}{\tan \beta} + \frac{MSA - MIN}{\tan \beta} + \frac{MEA - MSA}{\tan \gamma} + k3$$

où « DFAF » représente la distance d'approche finale, « OR » représente ledit rayon d'un cercle dans lequel est inscrite la plateforme cible, « K1 » représente une constante d'approche fixée par le constructeur, « K2 » représente une variable figée par le constructeur , « MSA » représente une altitude minimale de sécurité à laquelle est positionné le point d'approche finale, « MIN » représente une altitude minimale fixée par le constructeur, « MEA » représente une altitude minimale de route à laquelle est positionné le point d'approche initiale, « $\beta$ » représente l'angle d'un segment de vol en descente reliant le point d'approche finale à un plan horizontal contenant ledit point de décalage OIP et ledit point de décision MAP, « $\gamma$ » représente l'angle d'un segment de vol en descente reliant le point d'approche initiale à un plan horizontal contenant ledit point d'approche finale, « K3 » représente une constante figée par le constructeur.

Les angles $\beta$ et $\gamma$ peuvent varier suivant le type d'approche.

Par ailleurs, la trajectoire d'approche peut comprendre un point d'approche intermédiaire IF interposé entre le point d'approche initiale IAF ainsi que le point d'approche finale FAF, le point d'approche intermédiaire étant placé à la même altitude minimale de route que le point d'approche initiale IAF et à une distance d'approche intermédiaire DIF de la plateforme cible égale à :

$$DIF = OR + k1 + k2 + \frac{MIN - k4}{\tan \beta} + \frac{MSA - MIN}{\tan \beta} + \frac{MEA - MSA}{\tan \gamma}$$

où « DIF » représente la distance d'approche intermédiaire, « OR » représente ledit rayon d'un cercle dans lequel est inscrite la plateforme cible, « K1 » représente une constante d'approche fixée par le constructeur, « K2 » représente une variable figée par le constructeur , « MSA » représente une altitude minimale de sécurité à laquelle est positionné le point d'approche finale, « MIN » représente une altitude minimale fixée par le constructeur, « MEA » représente une altitude minimale de route à laquelle est positionné le point d'approche initiale, « $\beta$ » représente l'angle d'un segment de vol en descente reliant le point d'approche finale à un plan horizontal contenant ledit point de décalage OIP et ledit point de décision MAP, « $\gamma$ » représente l'angle d'un segment de vol en descente reliant le point d'approche initiale à un plan horizontal contenant ledit point d'approche finale.

Par ailleurs, la trajectoire d'approche peut comprendre un point de palier LPO interposé entre le point d'approche finale FAF et le point de décalage OIP, le point de palier étant placé à la même altitude minimale de décision MDA que le point de décalage OIP et à une distance de palier DLPO de la plateforme cible égale à

$$DLPO = OR + k1 + k2 + \frac{MIN - k4}{\tan \beta}$$

où « DLPO » représente la distance de palier, « OR » représente ledit rayon d'un cercle dans lequel est inscrite la plateforme cible, « K1 » représente une constante d'approche fixée par le constructeur, « K2 » représente une variable figée par le constructeur , « MIN » représente une altitude minimale fixée par le constructeur, « $\beta$ » représente l'angle d'un segment de vol en descente reliant le point d'approche finale à un plan horizontal contenant ledit point de décalage OIP et ledit point de décision MAP, « k4 » représente une constante prédéterminée.

Si le point d'approche final se trouve à moins d'une distance minimale de la plateforme, le module de navigation éloigne le point de palier LPO calculé et le point d'approche final calculé de la plateforme d'une même distance afin que le point d'approche final soit situé à au moins ladite distance minimale de la plateforme, cette distance minimale étant fonction du type d'approche.

Cette caractéristique permet de respecter certaines réglementations.

Par exemple, la distance minimale vaut 4 Nm. Si le point d'approche final se trouve à moins de 3.8 Nm de la plateforme, le module de navigation décale le point de palier calculé et le point d'approche final calculé de 0.2 Nm de la plateforme afin que le point d'approche final se trouve à 4 Nm de la plateforme.

On rappelle que l'unité « Nm » fait référence à un mile nautique équivalent à 1852 mètres.

L'invention et ses avantages apparaîtront avec plus de détails dans le cadre de la description qui suit avec des exemples de réalisation donnés à titre illustratif en référence aux figures annexées qui représentent :

-   la figure 1, un schéma présentant un aéronef mettant en oeuvre le procédé selon l'invention,

-   la figure 2, un schéma présentant le procédé selon l'invention,

-   les figures 3 à 5, des schémas présentant un module de paramétrage, et

-   la figure 6, un schéma présentant la trajectoire d'approche construite.

Les éléments présents dans plusieurs figures distinctes sont affectés d'une seule et même référence.

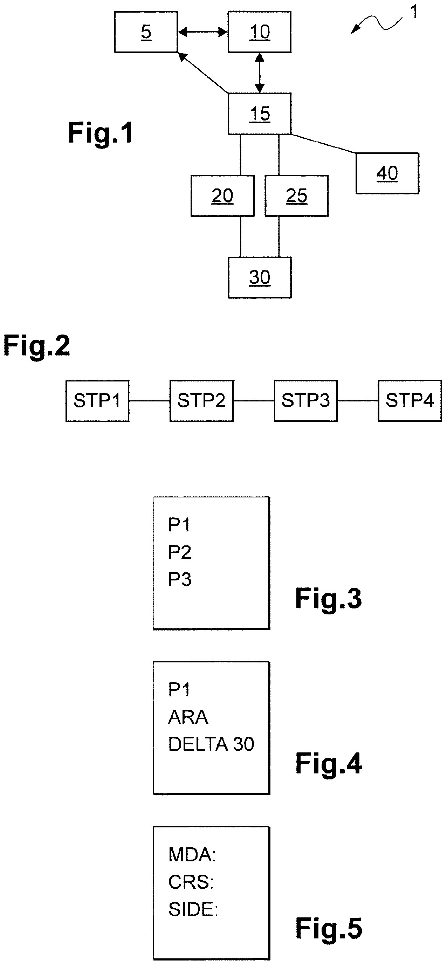

La figure 1 présente un aéronef 1, et notamment un aéronef à voilure tournante pouvant se poser sur une plateforme en mer.

Cet aéronef 1 est muni d'un système d'aide à la navigation incluant une base de données 5 embarquée communiquant avec un module de paramétrage.

Le module de paramétrage peut être un module d'un calculateur de navigation, tel qu'un calculateur connu sous l'acronyme FMS. La base de données 5 peut être reliée à un tel calculateur, ou encore représenter une partie constitutive de ce calculateur par exemple.

On comprend que la base de données inclut une mémoire non volatile stockant des données mémorisées par le constructeur.

Le module de paramétrage inclut par exemple un écran de visualisation, des moyens de saisie manoeuvrables par un équipage, une mémoire et un organe de calcul de type processeur par exemple exécutant des instructions mémorisées.

De plus, le système d'aide à la navigation inclut un module de navigation 15 pouvant être relié à la fois à la base de données 5 et au module de paramétrage 10. En fonction d'éléments transmis par la base de données 5 ainsi que par le module de paramétrage 10 et le cas échéant d'éléments mémorisés, le module de navigation 15 élabore une trajectoire d'approche automatiquement.

Le module de navigation peut être intégré dans un calculateur de navigation.

Le module de navigation peut alors communiquer avec un module de guidage vertical 20 et / ou avec un module de guidage horizontal 25 générant des consignes transmises à un système de pilotage automatique 30. Le système de pilotage automatique agit alors sur des moyens de commande pour diriger l'aéronef. On se référera à la littérature pour obtenir des informations relatives à un tel système de pilotage automatique ou à des modules de guidage.

Le module de navigation peut aussi communiquer avec des instruments de bord, via éventuellement les modules de guidage. Ainsi, des données relatives aux actes à réaliser pour suivre la trajectoire élaborée peuvent être affichées sur des instruments de bord de l'aéronef.

La figure 2 présente diverses étapes d'un procédé selon l'invention mis en oeuvre par un système d'aide à la navigation.

Durant une étape de construction STP1, un utilisateur élabore la base de données 5. Cet utilisateur établit une liste de plateformes susceptibles de constituer une destination pour ses aéronefs.

Dès lors, l'utilisateur mémorise dans la base de données 5 une pluralité d'attributs pour chaque plateforme sélectionnée. Ces attributs incluent un identifiant ID de la plateforme, des coordonnées WPT de la plateforme, une hauteur d'atterrissage HDECK à laquelle se trouve une zone d'atterrissage de la plateforme et le rayon OR d'un cercle dans lequel est inscrite la plateforme.

A bord de l'aéronef, l'équipage peut mettre en oeuvre une étape de paramétrage STP2 pour paramétrer l'approche vers une plateforme.

A cet effet, l'équipage peut choisir la plateforme cible sur laquelle l'aéronef doit atterrir.

En référence à la figure 3, le module de paramétrage peut présenter la liste des plateformes P1, P2, P3 mémorisées dans la base de données 5. L'équipage peut par exemple sélectionner la plateforme P1.

En référence à la figure 4 et de manière optionnelle, le module de paramétrage 10 peut par exemple présenter différents types d'approches disponibles. Il est à noter que la base de données peut éventuellement comporter un attribut pour les plateformes mémorisées faisant référence à ces types d'approches.

Cette liste d'approche peut notamment comprendre une approche de type ARA, ou encore une approche de type DELTA30.

En référence à la figure 5, le module de paramétrage permet à l'équipage de l'aéronef de paramétrer d'autres informations. Le module de paramétrage peut présenter des valeurs par défaut pour les informations à paramétrer.

Le module de paramétrage permet notamment durant l'étape de paramétrage STP2 de paramétrer un cap CRS à suivre pour atteindre la plateforme cible.

De plus, durant cette étape de paramétrage, l'équipage traite un paramètre de hauteur relatif à une altitude minimale de décision MDA pour une descente en approche finale vers ladite plateforme cible.

Selon une première variante, l'équipage spécifie que l'altitude minimale de décision MDA doit être paramétrée manuellement, et effectue un tel paramétrage. Le constructeur peut imposer une altitude minimale à respecter par sécurité. Par exemple, le constructeur peut décider que l'altitude minimale de décision MDA ne doit pas être inférieure à 300 ft, ou encore à la somme de la hauteur d'atterrissage HDECK et d'une marge de sécurité. Cette marge peut être de l'ordre de 50 ft.

Selon une deuxième variante, l'équipage spécifie que l'altitude minimale de décision MDA doit être paramétrée automatiquement.

Dès lors, l'altitude minimale de décision MDA est soit une altitude seuil, soit la somme de la hauteur d'atterrissage HDECK de la plateforme cible et d'une constante minimale de décision prédéterminée par le constructeur. La valeur la plus haute est utilisée par la suite.

L'altitude seuil peut dépendre des conditions de visibilité, et notamment d'un atterrissage de jour ou de nuit. Ainsi, l'altitude seuil peut être de 200 ft lors d'un atterrissage de jour et de 300 ft lors d'un atterrissage de nuit.

Par conséquent, le module de navigation 15 peut le cas échéant faire un prétraitement pour estimer l'heure d'arrivée sur la plateforme cible afin de déterminer si l'atterrissage va se produire de jour ou de nuit.

Selon l'exemple présenté, l'équipage peut le cas échéant choisir un côté de décalage SIDE pour déterminer où doit se trouver la plateforme par rapport à l'aéronef à un point de décision MAP.

Ce point de décision correspond à un point où l'équipage doit choisir soit de se diriger vers la plateforme pour procéder à l'atterrissage, soit de mettre en oeuvre une procédure alternative si l'atterrissage s'avère impossible.

En référence à la figure 2, durant une étape de construction STP3, le module de navigation élabore une trajectoire d'approche à suivre pour rejoindre la plateforme cible en fonction des attributs de la plateforme présents dans la base de données 5, et des informations paramétrées durant l'étape de paramétrage STP2.

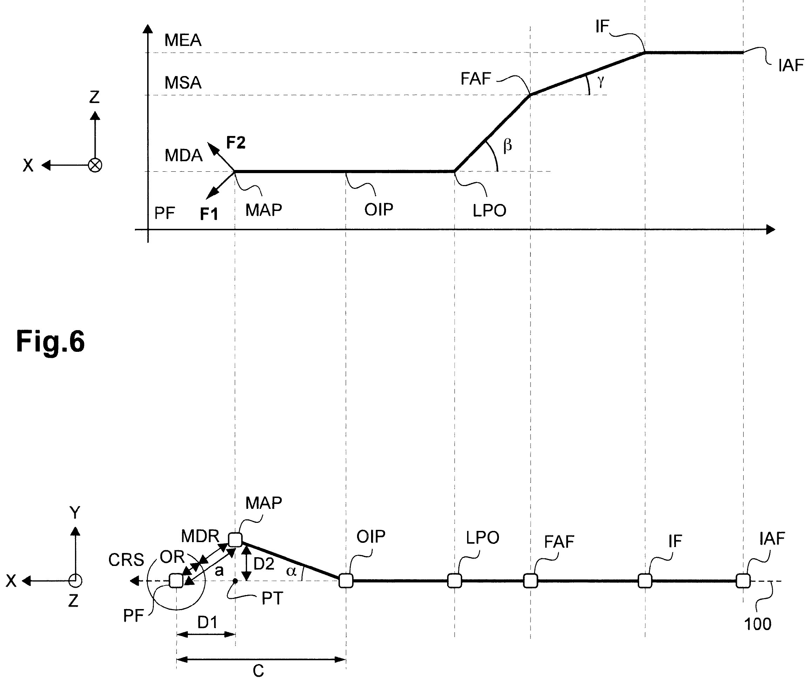

La figure 6 présente la trajectoire élaborée par le module de navigation. Plus précisément, la partie supérieure de la figure 6 présente une vue de côté et donc en élévation de la trajectoire élaborée pour se rendre sur une plateforme PF. La partie inférieure de la figure 6 présente une vue de dessus de la trajectoire élaborée.

Le module de navigation détermine notamment la position d'un point d'approche initiale IAF, d'un point d'approche finale FAF, d'un point de décalage OIP et d'un point de décision MAP en fonction desdites informations et desdits attributs.

Eventuellement, un point d'approche intermédiaire IF et un point de palier LPO sont aussi déterminés.

Le point d'approche initiale IAF, le point d'approche finale FAF, le point de décalage OIP, les coordonnées de la plateforme cible, et le cas échéant le point d'approche intermédiaire IF et le point de palier LPO sont agencés dans un même plan vertical 100. Ce plan vertical est dirigé selon le cap CRS paramétré.

Par contre, le point de décision MAP est décalé par rapport à ce plan vertical 100. Un décalage vers la gauche ou vers la droite du point de décision par rapport au plan vertical est éventuellement paramétrable durant l'étape de paramétrage.

Le point de décision, le point de décalage OIP, et le cas échéant le point de palier LPO sont disposés à une hauteur égale à l'altitude minimale de décision MDA.

En outre, le module de navigation détermine la position du point de décision MAP par rapport à la plateforme en estimant une distance longitudinal D1 séparant un point de calcul PT de la plateforme selon ledit cap CRS, et une distance orthogonale D2 séparant orthogonalement le point de décision MAP du point de calcul PT. Ainsi,

$$D1 = a * \cos[-\alpha + \arcsin(\frac{c}{a} * \sin\alpha)]$$

$$D2 = a * \sin[-\alpha + \arcsin(\frac{c}{a} * \sin\alpha)]$$

avec a=OR+MDR et c= CTEOIP + OR

où « * » représente le signe de la multiplication, « OR » représente le rayon d'un cercle dans lequel est inscrite la plateforme cible, « MDR » et « CTEOIP » deux constantes fixées par le constructeur, « α » représente un angle de décalage fixé par le constructeur.

La constante MDR dite « constante de décalage final » peut valoir 0.75 Nm selon un type d'approche ARA, et 0,6 Nm selon un type d'approche DELTA30. De même, l'angle de décalage α peut valoir 10 degrés selon un type d'approche ARA, et 30 degrés selon un type d'approche DELTA30.

La constate CTEOIP dite « constante de décalage initial » peut valoir 1.5 Nm selon un type d'approche ARA, et 1.1 Nm selon un type d'approche DELTA30.

On note que le point de décalage OIP est positionné à une distance de décalage DOIP égale à la somme de ladite constante de décalage initial CTEOIP et dudit rayon OR.

Lorsque la trajectoire d'approche comprend un comprend un point de palier LPO, le point de palier est placé à une distance de palier DLPO de la plateforme cible égale à

$$DLPO = OR + k1 + k2 + \frac{MIN - k4}{\tan\beta}$$

où « DLPO » représente la distance de palier, « OR » représente ledit rayon d'un cercle dans lequel est inscrite la plateforme cible, « K1 » représente une constante d'approche fixée par le constructeur par exemple à 2 Nm, « K2 » représente une variable figée par le constructeur , « MIN » représente une altitude minimale fixée par le constructeur de l'ordre de 300 ft par exemple, « β » représente l'angle d'un segment de vol en descente reliant le point d'approche finale à un plan horizontal contenant ledit point de décalage OIP et ledit point de décision MAP, « k4 » représente une constante prédéterminée de l'ordre de 200 ft par exemple.

On note que la variable K2 peut être nulle dans le cadre d'une approche de type DELTA30.

Par contre, l'angle β dit « premier angle » par commodité peut valoir 3.75 degrés selon un type d'approche ARA, et 3 degrés selon un type d'approche DELTA30.

Par ailleurs, le point d'approche finale FAF est agencé à une altitude minimale de sécurité MSA.

Cette altitude minimale de sécurité MSA est soit égale à une altitude minimale de sécurité seuil HMSS, soit égale à la somme de ladite hauteur d'atterrissage HDECK et d'une constante minimale de sécurité CMIN prédéterminée par le constructeur. La valeur la plus haute des deux valeurs obtenues ainsi est alors utilisée soit : MSA = max (HMSS, CMIN + HDECK)

L'altitude minimale de sécurité seuil HMSS peut valoir 1000 ft selon un type d'approche ARA, et 900 ft selon un type d'approche DELTA30. De même, la constante minimale de sécurité CMIN peut valoir 500 ft selon un type d'approche ARA, et 400 ft selon un type d'approche DELTA30 par exemple.

Le point d'approche finale FAF est alors positionné à une distance d'approche finale DFAF de la plateforme cible égale à :

$$DFAF = DLPO + \frac{MSA - MIN}{\tan \beta}$$

où « DFAF » représente la distance d'approche finale, « DLPO » représente la distance de palier, « MSA » représente l'altitude minimale de sécurité, « MIN » représente l'altitude minimale fixée par le constructeur, « $\beta$ » représente l'angle d'un segment de vol en descente reliant le point d'approche finale à un plan horizontal contenant ledit point de décalage OIP et ledit point de décision MAP.

Le point d'approche initiale IAF et le cas échéant le point d'approche intermédiaire sont positionnés à une altitude minimale de route MEA. Cette altitude minimale de route MEA est soit égale à une altitude minimale de route seuil HMRS, soit égale à la somme de la hauteur d'atterrissage HDECK et d'une constante minimale de route CROUTE prédéterminée par le constructeur.. La valeur la plus haute des deux valeurs obtenues ainsi est alors utilisée soit : MEA = max (HMRS, CROUTE + HDECK)

L'altitude minimale de route seuil HMRS peut valoir 1500 ft indépendamment du type d'approche. De même, la constante minimale de route CROUTE peut valoir 1000 ft indépendamment du type d'approche.

Lorsque, la trajectoire d'approche comprend un point d'approche intermédiaire IF, ce point d'approche intermédiaire est positionné à une distance d'approche intermédiaire DIF de la plateforme cible égale à

$$DIF = DFAF + \frac{MEA - MSA}{\tan \gamma}$$

où « DIF » représente la distance d'approche intermédiaire, « DFAF » représente la distance d'approche finale, « MSA » représente l'altitude minimale de sécurité, « MEA » représente l'altitude minimale de route à laquelle est positionné le point d'approche initiale, « $\gamma$ » représente l'angle d'un segment de vol en descente reliant le point d'approche initiale à un plan horizontal contenant ledit point d'approche finale.

L'angle $\gamma$ dit « deuxième angle » par commodité peut valoir 2.35 degrés selon un type d'approche ARA, et 3 degrés selon un type d'approche DELTA30.

Le point d'approche initiale IAF est alors positionné à une distance d'approche initiale DIAF de la plateforme cible égale à

$$DIAF = DIF + k3$$

où « DFAF » représente la distance d'approche finale, DIF » représente la distance d'approche intermédiaire, « K3 » représente une constante figée par le constructeur.

Alors, le module de navigation peut requérir le guidage de l'aéronef vers le point d'approche initial IAF. Le point d'approche initial IAF peut par exemple être rejoint par le biais d'un virage passant par un point connu sous l'expression anglaise « turn point ».

Dès lors, la trajectoire d'approche élaborée est suivie :

- soit par le biais d'un contrôle manuel de l'aéronef opéré totalement par l'équipage éventuellement à l'aide de données d'aide au pilotage affichées sur au moins un instrument de vol,

- soit par le biais d'un contrôle manuel de l'aéronef opéré par l'équipage et par le biais d'un contrôle automatique opéré par le système de pilotage automatique, l'équipage gérant le pilotage vertical de l'aéronef et le système de pilotage automatique gérant le pilotage horizontal de l'aéronef par exemple,

- soit par le biais d'un contrôle automatique opéré par le système de pilotage automatique.

L'équipage peut alors choisir de mettre fin au suivi de la trajectoire d'approche, ou encore peut requérir une modification de la trajectoire d'approche sin nécessaire.

Si la plateforme est en vue et en l'absence d'obstacles, l'équipage peut se diriger sur la plateforme pour procéder à l'atterrissage à partir du point de décalage OIP.

Dans la négative, l'aéronef est dirigé vers le point de décision MAP. Lorsque le point de décision est atteint, si l'équipage visualise la plateforme et si l'atterrissage est possible, l'équipage se dirige vers la plateforme selon la flèche F1. A l'inverse, l'équipage met en place une procédure usuelle visant à diriger l'aéronef vers une trajectoire annexe selon la flèche F2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour faciliter l'approche d'une plateforme (PF) avec un aéronef (1) comprenant :

    - une étape de construction (STP1) pour construire une base de données (5) de plateformes incluant pour chaque plateforme (PF) mémorisée des attributs incluant au moins un identifiant de la plateforme, des coordonnées de la plateforme,
    - une étape de paramétrage (STP2) à bord de l'aéronef dans un module de paramétrage (10) pour déterminer les informations suivantes :

        o la plateforme cible à atteindre parmi les plateformes mémorisées dans ladite base de données,
        o un cap (CRS) à suivre pour rejoindre ladite plateforme cible,
        o un paramètre de hauteur relatif à une altitude minimale de décision (MDA) pour une descente en approche finale vers ladite plateforme cible,

    - une étape de construction (STP3) pour construire une trajectoire d'approche mise en oeuvre par un module de navigation (15),

    **caractérisé en ce que** :

    - durant ladite étape de construction (STP1), lesdits attributs incluent au moins une hauteur d'une zone d'atterrissage de la plateforme dite « hauteur d'atterrissage (HDECK) » et le rayon (OR) d'un cercle dans lequel est inscrite la plateforme,
    - durant l'étape de construction (STP3), on détermine la position d'un point d'approche initiale (IAF), d'un point d'approche finale (FAF), d'un point de décalage (OIP) et d'un point de décision (MAP) en réponse auxdites informations et auxdits attributs de la plateforme cible, le point d'approche initiale (IAF) ainsi que le point d'approche finale (FAF) et le point de décalage (OIP) et la localisation des coordonnées de la plateforme cible étant présents dans un même plan vertical (100) dirigé selon ledit cap (CRS), le point de décision (MAP) étant décalé par rapport à ce plan vertical (100).

2. Procédé selon la revendication 1,
   **caractérisé en ce que** durant l'étape de paramétrage (STP2), on choisit un type d'approche parmi une liste de type d'approches prédéterminées.

3. Procédé selon l'une quelconque des revendications 1 à 2,
   **caractérisé en ce que** ledit paramètre de hauteur inclut un choix de détermination manuelle d'une altitude minimale de décision (MDA) paramétrée manuellement par un pilote à laquelle sont positionnés ledit point de décalage (OIP) et ledit point de décision (MAP).

4. Procédé selon l'une quelconque des revendications 1 à 2,
   **caractérisé en ce que** ledit paramètre de hauteur est un choix de détermination automatique par le module de navigation d'une altitude minimale de décision (MDA) à laquelle sont positionnés ledit point de décalage (OIP) et ledit point de décision (MAP).

5. Procédé selon la revendication 4,
   **caractérisé en ce que** ladite altitude minimale de décision (MDA) est la valeur maximale entre d'une part une altitude seuil et, d'autre part la somme de ladite hauteur d'atterrissage (HDECK) et d'une constante minimale de décision prédéterminée par le constructeur.

6. Procédé selon la revendication 5,
   **caractérisé en ce que** ledit module de navigation (15) détermine l'heure d'arrivée sur la plateforme, ladite altitude seuil variant selon ladite heure d'arrivée.

**7.** Procédé selon l'une quelconque des revendications 1 à 6,
**caractérisé en ce que** ledit point de décision (MAP) est positionné en déterminant une distance longitudinale (D1) séparant la plateforme d'un point de calcul, et en déterminant une distance orthogonale (D2) séparant le point de calcul du point de décision (MAP) pour décaler ledit point de décision dudit plan vertical selon les relations suivantes :

$$D1 = a * \cos[-\alpha + \arcsin(\frac{c}{a} * \sin \alpha)]$$

$$D2 = a * \sin[-\alpha + \arcsin(\frac{c}{a} * \sin \alpha)]$$

Avec a=OR+MDR et c= CTEOIP + OR
où « * » représente le signe de la multiplication, « OR » représente ledit rayon d'un cercle dans lequel est inscrite la plateforme cible, « MDR » et « CTEOIP » deux constantes fixées par le constructeur, « $\alpha$ » représente un angle de décalage fixé par le constructeur.

**8.** Procédé selon l'une quelconque des revendications 1 à 7, **caractérisé en ce que** durant l'étape de paramétrage (STP2), on choisit un côté de décalage du point de décision par rapport audit plan vertical (100).

**9.** Procédé selon l'une quelconque des revendications 1 à 8,
**caractérisé en ce que** ledit point de décalage (OIP) est positionné à une distance de décalage (DOIP) de la plateforme cible égale à la somme d'une constante (CTEOIP) fixée par le constructeur et dudit rayon d'un cercle dans lequel est inscrite la plateforme cible.

**10.** Procédé selon l'une quelconque des revendications 1 à 9,
**caractérisé en ce que** ledit point d'approche finale (FAF) est positionné à une altitude minimale de sécurité (MSA), ladite altitude minimale de sécurité (MSA) étant égale à la valeur maximale entre d'une part une altitude minimale de sécurité seuil et, d'autre part la somme de ladite hauteur d'atterrissage et d'une constante minimale de sécurité prédéterminée par le constructeur.

**11.** Procédé selon l'une quelconque des revendications 1 à 10,
**caractérisé en ce que** ledit point d'approche finale (FAF) est positionné à une distance d'approche finale (DFAF) de la plateforme cible égale à

$$DFAF = OR + k1 + k2 + \frac{MIN - k4}{\tan \beta} + \frac{MSA - MIN}{\tan \beta}$$

où « DFAF » représente la distance d'approche finale, « OR » représente ledit rayon d'un cercle dans lequel est inscrite la plateforme cible, « K1 » représente une constante d'approche fixée par le constructeur, « K2 » représente une variable figée par le constructeur, « k4 » représente une constante prédéterminée, « MSA » représente une altitude minimale de sécurité à laquelle est positionné le point d'approche final, « MIN » représente une altitude minimale fixée par le constructeur, « $\beta$ » représente l'angle d'un segment de vol en descente reliant le point d'approche finale à un plan horizontal contenant ledit point de décalage (OIP) et ledit point de décision (MAP).

**12.** Procédé selon l'une quelconque des revendications 1 à 9,
**caractérisé en ce que** ledit point d'approche initiale (IAF) est positionné à une altitude minimale de route (MEA), ladite altitude minimale de route (MEA) étant égale à la valeur maximale entre d'une part une altitude minimale de route seuil et, d'autre part la somme de ladite hauteur d'atterrissage et d'une constante minimale de route prédéterminée par le constructeur.

**13.** Procédé selon l'une quelconque des revendications 1 à 10,
**caractérisé en ce que** ledit point d'approche initiale (IAF) est positionné à une distance d'approche initiale (DIAF) de la plateforme cible égale à

$$DIAF = OR + k1 + k2 + \frac{MIN - k4}{\tan \beta} + \frac{MSA - MIN}{\tan \beta} + \frac{MEA - MSA}{\tan \gamma} + k3$$

où « DFAF » représente la distance d'approche finale, « OR » représente ledit rayon d'un cercle dans lequel est inscrite la plateforme cible, « K1 » représente une constante d'approche fixée par le constructeur, « K2 » représente une variable figée par le constructeur, « k4 » représente une constante prédéterminée, « MSA » représente une altitude minimale de sécurité à laquelle est positionné le point d'approche finale, « MIN » représente une altitude minimale fixée par le constructeur, « MEA » représente une altitude minimale de route à laquelle est positionné le point d'approche initiale, « $\beta$ » représente l'angle d'un segment de vol en descente reliant le point d'approche finale à un plan horizontal contenant ledit point de décalage (OIP) et ledit point de décision (MAP), « $\gamma$ » représente l'angle d'un segment de vol en descente reliant le point d'approche initiale à un plan horizontal contenant ledit point d'approche finale, « K3 » représente une constante figée par le constructeur .

**14.** Procédé selon l'une quelconque des revendications 1 à 13,
**caractérisé en ce que** ladite trajectoire d'approche comprend un point d'approche intermédiaire (IF) interposé entre le point d'approche initiale (IAF) ainsi que le point d'approche finale (FAF),e le point d'approche intermédiaire étant placé à la même altitude minimale de route que le point d'approche initiale (IAF) et à une distance d'approche intermédiaire (DIF) de la plateforme cible égale à

$$DIF = OR + k1 + k2 + \frac{MIN - k4}{\tan \beta} + \frac{MSA - MIN}{\tan \beta} + \frac{MEA - MSA}{\tan \gamma}$$

où « DIF » représente la distance d'approche intermédiaire, « OR » représente ledit rayon d'un cercle dans lequel est inscrite la plateforme cible, « K1 » représente une constante d'approche fixée par le constructeur, « K2 » représente une variable figée par le constructeur, « k4 » représente une constante prédéterminée, « MSA » représente une altitude minimale de sécurité à laquelle est positionné le point d'approche finale, « MIN » représente une altitude minimale fixée par le constructeur, « MEA » représente une altitude minimale de route à laquelle est positionné le point d'approche initiale, « $\beta$ » représente l'angle d'un segment de vol en descente reliant le point d'approche finale à un plan horizontal contenant ledit point de décalage (OIP) et ledit point de décision (MAP), « $\gamma$ » représente l'angle d'un segment de vol en descente reliant le point d'approche initiale à un plan horizontal contenant ledit point d'approche finale.

**15.** Procédé selon l'une quelconque des revendications 1 à 13,
**caractérisé en ce que** ladite trajectoire d'approche comprend un point de palier (LPO) interposé entre le point d'approche finale (FAF) et le point de décalage (OIP), le point de palier étant placé à la même altitude minimale de décision (MDA) que le point de décalage (OIP et à une distance de palier (DLPO) de la plateforme cible égale à

$$DLPO = OR + k1 + k2 + \frac{MIN - k4}{\tan \beta}$$

où « DLPO » représente la distance de palier, « OR » représente ledit rayon d'un cercle dans lequel est inscrite la plateforme cible, « K1 » représente une constante d'approche fixée par le constructeur, « K2 » représente une variable figée par le constructeur , « MIN » représente une altitude minimale fixée par le constructeur, « $\beta$ » représente l'angle d'un segment de vol en descente reliant le point d'approche finale à un plan horizontal contenant ledit point de décalage (OIP) et ledit point de décision (MAP), « k4 » représente une constante prédéterminée.

**16.** Procédé selon la revendication 15,
**caractérisé en ce que** si le point d'approche final se trouve à moins d'une distance minimale de la plateforme, le module de navigation (15) éloigne le point de palier (LPO) calculé et le point d'approche final calculé de la plateforme d'une même distance afin que le point d'approche final soit situé à au moins cette distance minimale.

**17.** Procédé selon l'une quelconque des revendications 1 à 16,
**caractérisé en ce qu'**un module de guidage vertical (20) et un module de guidage horizontal (25) communiquent avec un système de pilotage (30) pour guider l'aéronef le long de la trajectoire d'approche élaborée par le module de navigation (15).

**18.** Procédé selon l'une quelconque des revendications 1 à 17,
**caractérisé en ce que** ce procédé inclut une étape de guidage sur ledit point d'approche initiale (IAF) calculé.

**Patentansprüche**

**1.** Verfahren zum Erleichtern des Anfliegens einer Plattform (PF) mit einem Luftfahrzeug (1) mit folgenden Schritten:

- einem Konstruktionsschritt (STP1) zum Konstruieren einer Datenbank (5) von Plattformen, die für jede gespeicherte Plattform (PF) Attribute umfasst, die mindestens ein Identifizierungsmittel der Plattform und Koordinaten der Plattform umfassen,
- einem Schritt der Parametrisierung (STP2) an Bord des Luftfahrzeugs in einem Parametrisierungsmodul (10) zum Bestimmen folgender Information:

o die zu erreichende Zielplattform aus den in der Datenbank gespeicherten Plattformen,
◦ einen zu folgenden Kurs (CRS), um die Zielplattformen zu erreichen,
◦ einen Höhenparameter relativ zu einer minimalen Entscheidungshöhe (MDA) für einen Sinkflug bei der finale Annäherung an die Zielplattform,

- einen Konstruktionsschritt (STP3) zum Konstruieren einer Annäherungsflugbahn, der von einem Navigationsmodul (15) ausgeführt wird,

**dadurch gekennzeichnet, dass**:

- während des Konstruküonsschritts (STP1) die Attribute mindestens eine Höhe eines Landebereichs der Plattform, die "Landehöhe (HDECK)" genannt wird, und den Radius (OR) eines Kreises, in den die Plattform eingeschrieben ist, umfassen,
- während des Konstruktionsschritts (STP3) die Position eines ursprünglichen Annäherungspunktes (IAF), eines finalen Annäherungspunktes (FAF), eines Versetzungspunktes (OIP) und eines Entscheidungspunktes (MAP) in Reaktion auf die Informationen und auf die Attribute der Zielplattform bestimmt werden, wobei der ursprüngliche Annäherungspunkt (IAF) sowie der finale Annäherungspunkt (FAF) und der Versetzungspunkt (OIP) und die Lokalisierung der Koordinaten der Zielplattform in ein und derselben vertikalen Ebene (100) vorhanden sind, die entlang des Kurses (CRS) ausgerichtet ist, wobei der Entscheidungspunkt (MAP) relativ zu dieser vertikalen Ebene (100) versetzt ist.

**2.** Verfahren nach Anspruch 1,
**dadurch gekennzeichnet, dass** während des Parametrisierungsschritts (STP2) ein Annäherungstyp aus einer Liste von vorbestimmten Annähex-ungstypen gewählt wird.

**3.** Verfahren nach einem der Ansprüche 1 bis 2,
**dadurch gekennzeichnet, dass** der Höhenparameter die Wahl einer manuellen Bestimmung einer minimalen Entscheidungshöhe (MDA), die manuell durch einen Piloten parametrisiert wurde, umfasst, auf der der Versetzungspunkt (OIP) und der Entscheidungspunkt (MAP) positioniert sind.

**4.** Verfahren nach einem der Ansprüche 1 bis 2,
**dadurch gekennzeichnet, dass** der Höhenparameter eine Wahl der automatischen Bestimmung durch das Navigationssystem einer minimalen Entscheidungshöhe (MDA) ist, auf der der Versetzungspunkt (OIP) und der Entscheidungspunkt (MAP) liegen.

**5.** Verfahren nach Anspruch 4,
**dadurch gekennzeichnet, dass** die minimale Entscheidungshöhe (MDA) der Maximalwert von einerseits einem Höhenschwellenwert und andererseits der Summe aus der Landehöhe (HDECK) und einer minimalen Entscheidungskonstanten, die von dem Konstrukteur vorbestimmt ist, ist.

**6.** Verfahren nach Anspruch 5,
**dadurch gekennzeichnet, dass** das Navigationsmodul (15) die Ankunftszeit auf der Plattform bestimmt, wobei der Höhenschwellenwert sich in Abhängigkeit von der Ankunftszeit ändert.

7. Verfahren nach einem der Ansprüche 1 bis 6,
**dadurch gekennzeichnet, dass** der Entscheidungspunkt (MAP) positioniert wird, indem ein Längsabstand (D2), der die Plattform von einem Berechnungspunkt trennt, und ein orthogonaler Abstand (D2), der den Berechnungspunkt von dem Entscheidungspunkt (MAP) trennt, bestimmt werden, um den Entscheidungspunkt der vertikalen Ebene gemäß der folgenden Beziehungen zu versetzen:

$$D1 = a * \cos[-\alpha + \arcsin(\frac{c}{a} * \sin\alpha)]$$

$$D2 = a * \sin[-\alpha + \arcsin(\frac{c}{a} * \sin\alpha)]$$

mit a = OR + MDR und c = CTEOIP + OR,
wobei "*" das Multiplikationszeichen darstellt, "OR" den Radius eines Kreises, in den die Zielplattform eingeschrieben ist, bezeichnet, "MDR" und "CTEOIP" zwei von dem Konstrukteur festgelegte Konstanten bezeichnen, und "α" einen vom Konstrukteur festgelegten Versetzungswinkel bezeichnet.

8. Verfahren nach einem der Ansprüche 1 bis 7,
**dadurch gekennzeichnet, dass** während des Parametrisierungsschritts (STP2) eine Versetzungsseite des Entscheidungspunktes relativ zu der senkrechten Ebene (100) gewählt wird.

9. Verfahren nach einem der Ansprüche 1 bis 8,
**dadurch gekennzeichnet, dass** der Versetzungspunkt (OIP) in einem Versetzungsabstand (DOIP) der Zielplattform positioniert ist, der gleich der Summe aus einer vom Konstrukteur festgelegten Konstante (CTEOIP) und dem Radius eines Kreises, in den die Zielplattform eingeschrieben ist, ist.

10. Verfahren nach einem der Ansprüche 1 bis 9,
**dadurch gekennzeichnet, dass** der finale Annäherungspunkt (FAF) auf einer minimalen Sicherheitshöhe (MSA) positioniert ist, wobei die minimale Sicherheitshöhe (MSA) gleich dem Maximalwert von einerseits einem Schwellenwert der minimalen Sicherheitshöhe und andererseits der Summe aus der Landehöhe und einer vom Konstrukteur vorbestimmten minimalen Sicherheitskonstanten ist.

11. Verfahren nach einem der Ansprüche 1 bis 10,
**dadurch gekennzeichnet, dass** der finale Annäherungspunkt (FAF) in einem finalen Annäherungsabstand (DFAF) von der Zielplattform positioniert ist, gemäß der Gleichung

$$DFAF = OR + k1 + k2 + \frac{MIN - k4}{\tan\beta} + \frac{MSA - MIN}{\tan\beta} \quad ,$$

wobei "DFAF" den finalen Annäherungsabstand bezeichnet, "OR" den Radius eines Kreises bezeichnet, in den die Zielplattform eingeschrieben ist, "K1" eine vom Konstrukteur festgelegte Annäherungskonstante bezeichnet, "K2" eine vom Konstrukteur festgelegte Variable bezeichnet, "k4" eine vorbestimmte Konstante bezeichnet, "MSA" eine minimale Sicherheitshöhe bezeichnet, auf der der finale Annäherungspunkt positioniert ist, "MIN" eine vom Konstrukteur festgelegte minimale Höhe bezeichnet, "β" den Winkel eines Sinkflugsegments bezeichnet, der den finalen Annäherungspunkt mit einer horizontalen Ebene verbindet, die den Versetzungspunkt (OIP) und den Entscheidungspunkt (MAP) enthält.

12. Verfahren nach einem der Ansprüche 1 bis 9,
dadurch gekenntzeichnet, dass der ursprüngliche Annäherungspunkt (IAF) auf einer minimalen Kurshöhe (MEA) positioniert ist, wobei die minimale Kurshöhe (MEA) gleich einem Maximalwert von einerseits einem Schwellenwert der minimalen Kurshöhe und andererseits der Summe aus der Landehöhe und einer vom Konstrukteur vorbestimmten minimalen Kurskonstanten ist.

13. Verfahren nach einem der Ansprüche 1 bis 10,

dadurch gekenntzeichnet, dass der ursprüngliche Annäherungspunkt (IAF) in einem ursprünglichen Annäherungsabstand (DIAF) von der Zielplattform positioniert ist, der gleich

$$DIAF = OR + k1 + k2 + \frac{MIN - k4}{\tan\beta} + \frac{MSA - MIN}{\tan\beta} + \frac{MEA - MSA}{\tan\gamma} + k3$$

ist, wobei "DFAF" den finalen Annäherungsabstand bezeichnet, "OR" den Radius eines Kreises bezeichnet, in den die Zielplattform eingeschrieben ist, "K1" eine vom Konstrukteur festgelegte Annäherungskonstante bezeichnet, "K2" eine vom Konstrukteur festgelegte Variable bezeichnet, "k4" eine vorbestimmte Konstante bezeichnet, "MSA" eine minimale Sicherheitshöhe bezeichnet, auf der der finale, Annäherungspunkt positioniert ist, "MIN" eine vom Konstrukteur festgelegte minimale Höhe bezeichnet, "MEA" eine minimale Kurshöhe, auf der der ursprüngliche Annäherungspunkt positioniert ist, bezeichnet, "β" den Winkel eines Sinkflugsegments bezeichnet, der den finalen Annäherungspunkt mit einer horizontalen Ebene verbindet, die den Versetzungspunkt (OIP) und den Entscheidungspunkt (MAP) enthält, "γ" den Winkel eines Sinkflugsegments bezeichnet, der den ursprünglichen Annäherungspunkt mit einer horizontalen Ebene, die den finalen Annäherungspunkt enthält, verbindet, "K3" eine vom Konstrukteur festgelegte Konstante bezeichnet.

**14.** Verfahren nach einem der Ansprüche 1 bis 13,
**dadurch gekennzeichnet, dass** die Annäherungsflugbahn einen Zwischenannäherungspunkt (IF) aufweist, der zwischen dem ursprünglichen Annäherungspunkt (IAF) sowie dem finalen Annäherungspunkt (FAF) angeordnet ist, und wobei der Zwischenannäherungspunkt auf derselben minimalen Kurshöhe angeordnet ist, wie der ursprüngliche Annäherungspunkt (IAF) und in einem Zwischenannäherungsabstand (DIF) von der Zielplattform, der gleich

$$DIF = OR + k1 + k2 + \frac{MIN - k4}{\tan\beta} + \frac{MSA - MIN}{\tan\beta} + \frac{MEA - MSA}{\tan\gamma}$$

ist, wobei "DIF" den Zwischenannäherungsabstand bezeichnet, "OR" den Radius eines Kreises bezeichnet, in den die Zielplattform eingeschrieben ist, "K1" eine vom Konstrukteur festgelegte Annäherungskonstante bezeichnet, "K2" eine vom Konstrukteur festgelegte Variable bezeichnet, "k4" eine vorbestimmte Konstante bezeichnet, "MSA" eine minimale Sicherheitshöhe bezeichnet, auf der der finale Annäherungspunkt positioniert ist, "MIN" eine vom Konstrukteur festgelegte minimale Höhe bezeichnet, "MEA" eine minimale Kurshöhe, auf der der ursprüngliche Annäherun.gspunkt positioniert ist, bezeichnet, "β" den Winkel eines Sinkflugsegments bezeichnet, der den finalen Annäherungspunkt mit einer horizontalen Ebene verbindet, die den Versetzungspunkt (OIP) und den Entscheidungspunkt (MAP) enthält, "γ" den Winkel eines Sinkflugsegments bezeichnet, der den ursprünglichen Annäherungspunkt mit einer horizontalen Ebene, die den finalen Annäherungspunkt enthält, verbindet.

**15.** Verfahren nach einem der Ansprüche 1 bis 13,
**dadurch gekennzeichnet, dass** die Annäherungsbahn einen Zwischenphasenpunkt (LPO) aufweist, der zwischen dem finalen Annäherungspunkt (FAF) und dem Versetzungspunkt (OIP) angeordnet ist, wobei der Zwischenphasenpunkt auf der gleichen minimalen Entscheidungshöhe (MDA) wie der Versetzungspunkt und in einem Zwischenabstand von der Zielplattform angeordnet ist, der gleich

$$DLPO = OR + k1 + k2 + \frac{MIN - k4}{\tan\beta}$$

ist, wobei "DLPO" den Zwischenabstand bezeichnet, "OR" den Radius eines Kreises bezeichnet, in den die Zielplattform eingeschrieben ist, "K1" eine vom Konstrukteur festgelegte Annäherungskonstante bezeichnet, "K2" eine vom Konstrukteur festgelegte Variable bezeichnet, "MIN" eine vom Konstrukteur festgelegte minimale Höhe bezeichnet, "β" den Winkel eines Sinkflugsegments bezeichnet, der den finalen Annäherungspunkt mit einer horizontalen Ebene verbindet, die den Versetzungspunkt (OIP) und den Entscheidungspunkt (MAP) enthält, "k4" eine vorbestimmte Konstante bezeichnet.

**16.** Verfahren nach Anspruch 15,

**dadurch gekennzeichnet, dass** der finale Annäherungspunkt sich mindestens in einem minimalen Abstand von der Plattform befindet, wobei das Navigationsmodul (15) den berechneten Zwischenphasenpunkt (LPO) und den berechneten finalen Annäherungspunkt an die Plattform mit dem gleichen Abstand beabstandet, damit der finale Annäherungspunkt in mindestens diesem minimalen Abstand liegt.

**17.** Verfahren nach einem der Ansprüche 1 bis 16,
**dadurch gekennzeichnet, dass** ein Modul (20) zur vertikalen Führung und ein Modul (25) zur horizontalen Führung mit einem Steuersystem (30) kommunizieren, um das Luftfahrzeug entlang der von dem Navigationsmodul (15) ausgearbeiteten Annäherungsbahn zu führen.

**18.** Verfahren nach einem der Ansprüche 1 bis 17,
**dadurch gekennzeichnet, dass** das Verfahren einen Schritt der Führung auf den berechneten ursprünglichen Annäherungspunkt (IAF) zu umfasst.

**Claims**

**1.** Method for facilitating the approach to a platform (PF) with an aircraft (1) comprising:

- a construction step (STP1) for constructing a database (5) of platforms including for each stored platform (PF) attributes including at least one platform identifier, coordinates of the platform,
- a parameterisation step (STP2) on board the aircraft in a parameterisation module (10) for determining the following information:

o the target platform to be reached from among the platforms stored in said database,
○ a course (CRS) to be followed in order to reach said target platform,
○ a height parameter relative to a minimum decision altitude (MDA) for a descent in a final approach towards said target platform,

- a construction step (STP3) for constructing an approach trajectory implemented by a navigation module (15),

**characterised in that**:

- during said construction step (STP1), said attributes include at least one height of a landing zone of the platform called the "landing height (HDECK)" and the radius (OR) of a circle within which the platform is inscribed,
- during the construction step (STP3), the position of an initial approach fix (IAF), of a final approach fix (FAF), of an offset point (OIP) and of a decision point (MAP) is determined in response to said information and to said attributes of the target platform, the initial approach fix (IAF) and the final approach fix (FAF) and the offset point (OIP) and the location of the coordinates of the target platform being present in a same vertical plane (100) directed along said course (CRS), the decision point (MAP) being offset in relation to this vertical plane (100).

**2.** Method according to claim 1,
**characterised in that** during the parameterisation step (STP2), a type of approach is chosen from a list of predetermined types of approaches.

**3.** Method according to any one of claims 1 to 2,
**characterised in that** said height parameter includes a choice of manual determination of a minimum decision altitude (MDA) manually parameterised by a pilot at which said offset point (OIP) and said decision point (MAP) are positioned.

**4.** Method according to any one of claims 1 to 2,
**characterised in that** said height parameter is a choice of automatic determination by the navigation module of a minimum decision altitude (MDA) at which said offset point (OIP) and said decision point (MAP) are positioned.

**5.** Method according to claim 4,
**characterised in that** said minimum decision altitude (MDA) is the maximum value between a threshold altitude, on the one hand, and the sum of said landing height (HDECK) and of a minimum decision constant predetermined by the constructor, on the other hand.

**6.** Method according to claim 5,
**characterised in that** said navigation module (15) determines the time of arrival on the platform, said threshold altitude varying depending on said time of arrival.

**7.** Method according to any one of claims 1 to 6,
**characterised in that** said decision point (MAP) is positioned by determining a longitudinal distance (D1) separating the platform from a calculation point, and by determining an orthogonal distance (D2) separating the calculation point from the decision point (MAP), in order to offset the decision point from said vertical plane according to the following relationships:

$$D1 = a * \cos\left[-\alpha + \arcsin\left(\frac{c}{a} * \sin\alpha\right)\right]$$

$$D2 = a * \sin\left[-\alpha + \arcsin\left(\frac{c}{a} * \sin\alpha\right)\right]$$

With a=OR+MDR and c= CTEOIP + OR
where "*" represents the multiplication sign, "OR" represents the radius of a circle within which the target platform is inscribed, "MDR" and "CTEOIP" represent two constants set by the constructor, "$\alpha$" represents an offset angle set by the constructor.

**8.** Method according to any one of claims 1 to 7,
**characterised in that** during the parameterisation step (STP2), a side for the offset of the decision point in relation to said vertical plane (100) is chosen.

**9.** Method according to any one of claims 1 to 8,
**characterised in that** said offset point (OIP) is positioned at an offset distance (DOIP) from the target platform equal to the sum of a constant (CTEOIP) set by the constructor and of said radius of a circle within which the target platform is inscribed.

**10.** Method according to any one of claims 1 to 9,
**characterised in that** said final approach fix (FAF) is positioned at a minimum safe altitude (MSA), said minimum safe altitude (MSA) being equal to the maximum value between a threshold minimum safe altitude, on the one hand, and the sum of said landing height and of a minimum safety constant predetermined by the constructor, on the other hand.

**11.** Method according to any one of claims 1 to 10,
**characterised in that** said final approach fix (FAF) is positioned at a final approach distance (DFAF) from the target platform equal to

$$DFAF = OR + k1 + k2 + \frac{MIN - k4}{\tan\beta} + \frac{MSA - MIN}{\tan\beta}$$

where "DFAF" represents the final approach distance, "OR" represents said radius of a circle within which the target platform is inscribed, "K1" represents an approach constant set by the constructor, "K2" represents a variable set by the constructor, "k4" represents a predetermined constant, "MSA" represents a minimum safe altitude at which the final approach fix is positioned, "MIN" represents a minimum altitude set by the constructor, "$\beta$" represents the angle of a descending flight segment connecting the final approach fix to a horizontal plane containing said offset point (OIP) and said decision point (MAP).

**12.** Method according to any one of claims 1 to 9,
**characterised in that** said initial approach fix (IAF) is positioned at a minimum enroute altitude (MEA), said minimum enroute altitude (MEA) being equal to the maximum value between a threshold minimum enroute altitude, on the one hand, and the sum of said landing height and of a minimum enroute constant predetermined by the constructor, on the other hand.

**13.** Method according to any one of claims 1 to 10,
**characterised in that** said initial approach fix (IAF) is positioned at an initial approach distance (DIAF) from the target platform equal to

$$DFAF = OR + k1 + k2 + \frac{MIN-k4}{tan\beta} + \frac{MSA-MIN}{tan\beta} + \frac{MEA-MSA}{tan\gamma} + k3$$

where "DFAF" represents the final approach distance, "OR" represents said radius of a circle within which the target platform is inscribed, "K1" represents an approach constant set by the constructor, "K2" represents a variable set by the constructor, "k4" represents a predetermined constant, "MSA" represents a minimum safe altitude at which the final approach fix is positioned, "MIN" represents a minimum altitude set by the constructor, "MEA" represents a minimum enroute altitude at which the initial approach fix is positioned, "$\beta$" represents the angle of a descending flight segment connecting the final approach fix to a horizontal plane containing said offset point (OIP) and said decision point (MAP), "$\gamma$" represents the angle of a descending flight segment connecting the initial approach fix to a horizontal plane containing said final approach fix, "K3" represents a constant set by the constructor.

**14.** Method according to any one of claims 1 to 13,
**characterised in that** said approach trajectory comprises an intermediate approach fix (IF) interposed between the initial approach fix (IAF) as well as the final approach fix (FAF), the intermediate approach fix being positioned at the same minimum enroute altitude as the initial approach fix (IAF) and at an intermediate approach distance (DIF) from the target platform equal to

$$DIF = OR + k1 + k2 + \frac{MIN-k4}{tan\beta} + \frac{MSA-MIN}{tan\beta} + \frac{MEA-MSA}{tan\gamma}$$

where "DIF" represents the intermediate approach distance, "OR" represents said radius of a circle within which the target platform is inscribed, "K1" represents an approach constant set by the constructor, "K2" represents a variable set by the constructor, "k4" represents a predetermined constant, "MSA" represents a minimum safe altitude at which the final approach fix is positioned, "MIN" represents a minimum altitude set by the constructor, "MEA" represents a minimum enroute altitude at which the initial approach fix is positioned, "$\beta$" represents the angle of a descending flight segment connecting the final approach fix to a horizontal plane containing said offset point (OIP) and said decision point (MAP), "$\gamma$" represents the angle of a descending flight segment connecting the initial approach fix to a horizontal plane containing said final approach fix.

**15.** Method according to any one of claims 1 to 13,
**characterised in that** said approach trajectory comprises a level point (LPO) interposed between the final approach fix (FAF) and the offset point (OIP), the level point being positioned at the same minimum decision altitude (MDA) as the offset point (OIP) and at a level distance (DLPO) from the target platform equal to

$$DLPO = OR + k1 + k2 + \frac{MIN - k4}{tan\beta}$$

where "DLPO" represents the level distance, "OR" represents said radius of a circle within which the target platform is inscribed, "K1" represents an approach constant set by the constructor, "K2" represents a variable set by the constructor, "MIN" represents a minimum altitude set by the constructor, "$\beta$" represents the angle of a descending flight segment connecting the final approach fix to a horizontal plane containing said offset point (OIP) and said decision point (MAP), "k4" represents a predetermined constant.

**16.** Method according to claim 15,
**characterised in that** if the final approach fix is located at less than a minimum distance from the platform, the navigation module (15) moves the calculated level point (LPO) and the calculated final approach fix away from the platform by a same distance, so that the final approach fix is located at least at this minimum distance.

**17.** Method according to any one of claims 1 to 16,
**characterised in that** a vertical guidance module (20) and a horizontal guidance module (25) communicate with a piloting system (30) to guide the aircraft along the approach trajectory developed by the navigation module (15).

18. Method according to any one of claims 1 to 17,
**characterised in that** this method includes a step for guidance on said calculated initial approach fix (IAF).

**Fig.1**

**Fig.2**

**Fig.3**

**Fig.4**

**Fig.5**

Fig.6

EP 2 770 395 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100168939 A
- US 20080119970 A

- US 6720891 B

**Littérature non-brevet citée dans la description**

- Approval of Offshore Standard Approach Procédures, Airborne Radar Approaches, and Helicopter En Route Descent Areas. *AC90-80B,* 12 Avril 1999
- Subpart E IEM to Appendix 1. *JAR OPS,* 01 Janvier 2002
- *EU-OPS COMMISSION REGULATION (EU) No 965/2012,* 05 Octobre 2012
- *The SBAS Offshore Approach Procédure (SOAP),* Janvier 2010
- CMA-9000 flight management system operator's manual. 21 Août 2008

- **N.MCFARLANE.** *A new procédure for North Sea Helicopter Opérations,* 09 Octobre 2008
- **K.M DODSON ; J.R.A. STEVENS.** A North Sea trial to investigate the use of Differential GPS for instrument Approaches to Offshore Platforms. *23rd European Rotorcraft Forum, Dresden, Germany,* Septembre 1997
- EGNOS Offshore Helicopter Approach Procédure. *GIANT GNSS INTRODUCTION IN THE AVIATOR SECTOR,* 24 Janvier 2088